# EUROPEAN PATENT APPLICATION

(11) **EP 3 070 464 A1**
(43) Date of publication of application: **21.09.2016**
(21) Application number: 15159706.9
(22) Date of filing: 18.03.2015
(51) Int. Cl.: G01N 27/414

(54) **An apparatus and associated methods**

(71) Applicant: Nokia Technologies OY, 02610 Espoo (FI)
(72) Inventor: Bower, Chris, Ely CB6 3EN (GB); Allen, Mark, Great Cambourne, Cambridgeshire CB23 6BA (GB); White, Richard, Huntingdon PE28 9DY (GB)
(74) Representative: Potter Clarkson LLP

(57) **Abstract**

An apparatus configured to:
based on a measurement taken from a bridge circuit that forms a sensor element and that includes a resistive element having a first electrode and a second electrode and a channel, the channel formed between the first electrode and the second electrode and the resistive element arranged in one of at least two branches of a bridge circuit, provide for the physical modification of at least one of;
the channel;
a contact region between the first electrode and the channel; and
a contact region between the second electrode and the channel; to modify the resistance of the resistive element to balance the bridge circuit for a predetermined stimuli applied to said sensor element.

## Description

### Technical Field

The present disclosure relates to the field of sensor element fabrication, associated methods, computer programs and apparatus.

### Background

The use of sensors is increasing and it is desirable to obtain accurate and easy to fabricate sensors and sensor arrays. The calibration of sensors and sensor arrays is difficult and can lead to complicated electronics associated with the sensors or complex calibration procedures during device fabrication.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus configured to:
based on a measurement taken from a bridge circuit that forms a sensor element and that includes a resistive element having a first electrode and a second electrode and a channel, the channel formed between the first electrode and the second electrode and the resistive element arranged in one of at least two branches of a bridge circuit, provide for the physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.

The apparatus may be a semiconductor device fabrication apparatus or a module/circuitry for the same.

In a further aspect there is provided a method, the method comprising;
based on a measurement taken from a bridge circuit that forms a sensor element and includes a resistive element having a first electrode and a second electrode and a channel, the channel formed between the first electrode and the second electrode and the resistive element arranged in one of at least two branches of a bridge circuit, providing for physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.

The use of a bridge circuit as a sensor element may be advantageous. A bridge circuit may be configured to be in balance, i.e. no current flow between branches of the bridge circuit, for a particular stimuli. To achieve a balance the resistance of resistive elements within the bridge circuit can be advantageously modified by physical modification during fabrication. The physical modification of the contact region, comprising an area over which the electrode that contacts channel, may be advantageous. Thus, on application of a voltage across the bridge, the voltage between the branches may form the measurement used to control the physical modification.

The resistance of the resistive element may be physically modified based on the measurement and a resistance of a second resistive element. The second resistive element may be located in a different branch of the bridge circuit to the resistive element. The sensor element may form part of a sensor array. The second resistive element may be located in a different sensor element of the sensor array.

The resistive element may comprise a transducer of the sensor element. The transducer may comprise a thin film transistor (TFT). The TFT may comprise a graphene based field effect transistor.

The bridge circuit may comprise a Wheatstone bridge where the resistive element comprises one of a sensing element and other resistive elements.

The method may comprise determining a degree of the physical modification required based on said measurement and subsequently providing for said determined degree of physical modification. The step of determining the degree of physical modification may comprise selecting a degree of physical modification from a set of predetermined physical modifications, the set of predetermined physical modifications based on the form of the first and/or second electrodes.

Thus, predetermined relationship data between physical modifications and resultant resistance changes may be used. The method may comprise taking a single resistance measurement or only taking resistance measurements prior to the physical modification being performed. The method may include making a second measurement after the physical modification to determine its effect. The method may include performing a further physical modification based on the second measurement.

The method may comprise iteratively providing for the physical modification. The method may comprise use of closed loop feedback, using the measurement, for controlling the physical modification made to the resistive element. The physical modification may be based on measurements taken from a first electrode and a second electrode that is indicative of an electrical resistance of the resistive element or from bridge electrodes of the branches of the bridge.

The step of providing for physical modification may comprise providing for the physical modification of a width or length of the channel to adjust the resistance of the resistive element.

The modification to the channel width may be applied across a whole length or width of the channel or over part of channel's length or width. The physical modification may be performed by at least one of laser removal of resistive material, by etching, by printing conductive or semiconductive material or by doping.

The step of providing for physical modification comprises providing for the physical modification an area of contact between the first or second electrode and the channel to adjust the resistance of the resistive element.

The method may include;
providing for the addition of conductive material to increase a contact area between the first and/or second electrode and the channel; or
providing for the removal of conductive material to increase a contact area between the first and/or second electrode and the channel.

The physical modification to adjust the resistance of the resistive element may comprise one or more of;
laser ablation of part of the first and/or second electrodes or channel;
localised annealing of the first and/or second electrodes or channel;
etching of part of the first and/or second electrodes or channel;
printing of conductive or semiconductive material to add to the first and/or second electrodes and/or channel;
doping of a semiconductor material that forms said channel.

These methods of physical modification may form an aspect of the disclosure independent of the bridge circuit. Thus, a method of modifying the resistance of a resistive element comprising a channel defined between a first and second electrode, may comprise using a measurement of the electrical properties of the resistive element to provide for physical modification, during fabrication, of the resistive element by any one of laser ablation of part of the first and/or second electrodes or channel; localised annealing of the first and/or second electrodes or channel; etching of part of the first and/or second electrodes or channel; printing of conductive or semiconductive material to add to the first and/or second electrodes and/or channel; doping of a semiconductor material that forms said channel. An associated apparatus for providing for the physical modification may also be realised.

The first and/or second electrode, at their respective contact region, may be patterned to include a plurality of apertures, such that electrical contact between the electrode and the channel is absent at the apertures, the method including the steps of;
determining, based on the measurement taken from the first electrode and the second electrode, a number of the plurality of apertures to be filled, in full or in part, with conductive material to adjust the resistance of the resistive element; and
providing for the filling of the determined number of apertures.

The filling of the apertures may be performed iteratively which the measurement is taken. Alternatively the measurement may be used to determine a number of apertures to fill to achieve a desired resistance or balance.

Thus a predetermined relationship data between aperture filling and resistance change may be used, such as in the form of a look up table.

The plurality of apertures may comprise one or more of; holes or lines.

The step of providing for physical modification may be performed after encapsulation of the resistive element or before encapsulation. After encapsulation physical modification may be performed by laser, wherein the encapsulation is transparent to the frequency of radiation provided by the laser.

The resistive element may comprise one of;
a field effect transistor;
a transducer;
a graphene based field effect transistor;
a field effect transistor having a two-dimensional material forming at least part of the channel;
a diode or photo-diode.

The graphene based field effect transistor may comprise a graphene channel that has been functionalized with a sensitive material layer such as colloidal quantum dots, hydrophobins or other bioactive material, or equivalent, to form a sensor where the graphene channel functions as the transducer for the sensor.

The measurement taken from the sensor element is taken from at least one of;
the first and second electrodes of resistive element, the measurement indicative of the resistance of the resistive element; and
the bridge circuit, the measurement indicative of the balance of the bridge circuit.

The measurement may be performed before or after dicing of a substrate in which the sensors are formed. The method may include a step of forming a channel in a substrate, metalizing to form electrodes and optionally patterning the electrodes. The method may include the steps of making the physical modification.

The steps of any method disclosed herein do not have to be performed in the exact order disclosed, unless explicitly stated or understood by the skilled person.

In a further aspect there is provided a computer readable medium comprising computer program code stored thereon, the computer readable medium and computer program code being configured to, when run on at least one processor, perform at least the following:
based on a measurement taken from a bridge circuit that forms a sensor element and includes a resistive element having a first electrode and a second electrode and a channel, the channel formed between the first electrode and the second electrode and the resistive element arranged in one of at least two branches of a bridge circuit, providing for physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.

Throughout the present specification, descriptors relating to relative orientation and position, such as "top", "bottom", "upper", "lower", "above" and "below", as well as any adjective and adverb derivatives thereof, are used in the sense of the orientation of the apparatus as presented in the drawings. However, such descriptors are not intended to be in any way limiting to an intended use of the described or claimed invention.

Corresponding computer programs for implementing one or more steps of the methods disclosed herein are also within the present disclosure and are encompassed by one or more of the described example embodiments.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

In a further aspect there is provided an apparatus, the apparatus comprising means for, based on a measurement taken from a bridge circuit that forms a sensor element and that includes a resistive element having a first electrode and a second electrode and a channel, the channel formed between the first electrode and the second electrode and the resistive element arranged in one of at least two branches of a bridge circuit, providing for the physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.

The present disclosure includes one or more corresponding aspects, examples or features in isolation or in various combinations whether or not specifically stated (including claimed) in that combination or in isolation. Corresponding means and corresponding functional units (e.g., electrical parameter measurement unit, measurer, resistance measurer, galvanometer, controller, fabrication device) for performing one or more of the discussed functions are also within the present disclosure.

The above summary is intended to be merely exemplary and non-limiting.

### Brief Description of the Figures

A description is now given, by way of example only, with reference to the accompanying drawings, in which:
figure 1 illustrates an example apparatus embodiment comprising a number of electronic components, including memory and a processor, according to one embodiment of the present disclosure;
figure 2 illustrates an example apparatus embodiment comprising a number of electronic components, including memory, a processor and a communication unit, according to another embodiment of the present disclosure;
figure 3 illustrates an example apparatus embodiment comprising a number of electronic components, including memory and a processor, according to another embodiment of the present disclosure;
figure 4 illustrates an example bridge circuit;
figure 5 illustrates the bridge circuit of figure 4 forming a plurality of sensor elements in a sensor array;
figure 6 illustrates a resistive element (a TFT) of the bridge circuit and an example apparatus;
figure 7 illustrates the apparatus of figure 6 operating on a sensor array;
figures 8 and 9 illustrate an example method of physically modifying the resistance of a resistive element during fabrication;
figure 10 and 11 illustrate a further example method of physically modifying the resistance of a resistive element during fabrication;
figure 12 and 13 illustrate a still further example method of physically modifying the resistance of a resistive element during fabrication;
figures 14a and 14b illustrate the apparatus in communication with a remote server or with the cloud;
figure 15 illustrates a flowchart according to a method of the present disclosure; and
figure 16 illustrates schematically a computer readable medium providing a program.

### Description of Example Aspects

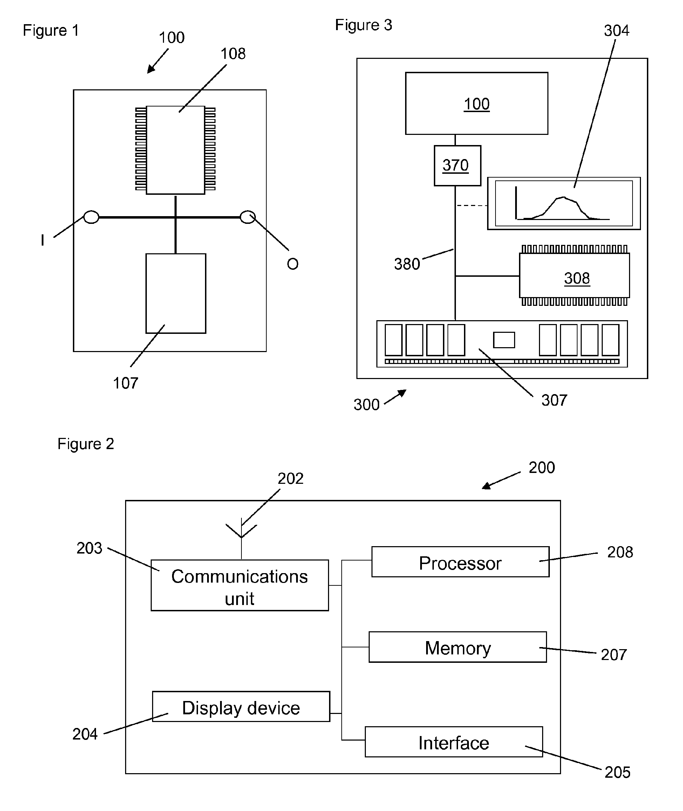

Figure 1 shows an apparatus 100 comprising memory 107, a processor 108, input I and output O. In this embodiment only one processor and one memory are shown but it will be appreciated that other embodiments may utilise more than one processor and/or more than one memory (e.g. same or different processor/memory types).

In this embodiment the apparatus 100 is an Application Specific Integrated Circuit (ASIC) for a fabrication device or fabrication device controller. In other embodiments the apparatus 100 can be a module for such a device, or may be the device itself, wherein the processor 108 is a general purpose CPU of the device and the memory 107 is general purpose memory comprised by the device.

The input I allows for receipt of signalling to the apparatus 100 from further components, such as components of a measurement device or fabrication device or a controller thereof or the like. The output O allows for onward provision of signalling from within the apparatus 100 to further components such as the same fabrication device or a different fabrication device. In this embodiment the input I and output O are part of a connection bus that allows for connection of the apparatus 100 to further components.

The processor 108 is a general purpose processor dedicated to executing/processing information received via the input I in accordance with instructions stored in the form of computer program code on the memory 107. The output signalling generated by such operations from the processor 108 is provided onwards to further components via the output O.

The memory 107 (not necessarily a single memory unit) is a computer readable medium (solid state memory in this example, but may be other types of memory such as a hard drive, ROM, RAM, Flash or the like) that stores computer program code. This computer program code stores instructions that are executable by the processor 108, when the program code is run on the processor 108. The internal connections between the memory 107 and the processor 108 can be understood to, in one or more example embodiments, provide an active coupling between the processor 108 and the memory 107 to allow the processor 108 to access the computer program code stored on the memory 107.

In this example the input I, output O, processor 108 and memory 107 are all electrically connected to one another internally to allow for electrical communication between the respective components I, O, 107, 108. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 depicts an apparatus 200 of a further example embodiment, such as a controller. In other example embodiments, the apparatus 200 may comprise a module for a controller, and may just comprise a suitably configured memory 207 and processor 208.

The example embodiment of figure 2 comprises a display device 204 such as, for example, a liquid crystal display (LCD), e-Ink or touch-screen user interface. The apparatus 200 of figure 2 is configured such that it may receive, include, and/or otherwise access data. For example, this example embodiment 200 comprises a communications unit 203, such as a receiver, transmitter, and/or transceiver, in communication with an antenna 202 for connecting to a wireless network and/or a port (not shown) for accepting a physical connection to a network, such that data may be received via one or more types of networks. This example embodiment comprises a memory 207 that stores data, possibly after being received via antenna 202 or port or after being generated at the user interface 205. The processor 208 may receive data from the user interface 205, from the memory 207, or from the communication unit 203. It will be appreciated that, in certain example embodiments, the display device 204 may incorporate the user interface 205. Regardless of the origin of the data, these data may be outputted to a user of apparatus 200 via the display device 204, and/or any other output devices provided with apparatus. The processor 208 may also store the data for later use in the memory 207. The memory 207 may store computer program code and/or applications which may be used to instruct/enable the processor 208 to perform functions (e.g. read, write, delete, edit or process data).

Figure 3 depicts a further example embodiment of an electronic device 300, such as a controller or fabrication device, or a module for such a device, the device comprising the apparatus 100 of figure 1. The apparatus 100 can be provided as a module for device 300, or even as a processor/memory for the device 300 or a processor/memory for a module for such a device 300. The device 300 comprises a processor 308 and a storage medium 307, which are connected (e.g. electrically and/or wirelessly) by a data bus 380. This data bus 380 can provide an active coupling between the processor 308 and the storage medium 307 to allow the processor 308 to access the computer program code. It will be appreciated that the components (e.g. memory, processor) of the device/apparatus may be linked via cloud computing architecture. For example, the storage device may be a remote server accessed via the internet by the processor.

The apparatus 100 in figure 3 is connected (e.g. electrically and/or wirelessly) to an input/output interface 370 that receives the output from the apparatus 100 and transmits this to the device 300 via data bus 380. Interface 370 can be connected via the data bus 380 to a display 304 (touch-sensitive or otherwise) that provides information from the apparatus 100 to a user. Display 304 can be part of the device 300 or can be separate. The device 300 also comprises a processor 308 configured for general control of the apparatus 100 as well as the device 300 by providing signalling to, and receiving signalling from, other device components to manage their operation.

The storage medium 307 is configured to store computer code configured to perform, control or enable the operation of the apparatus 100. The storage medium 307 may be configured to store settings for the other device components. The processor 308 may access the storage medium 307 to retrieve the component settings in order to manage the operation of the other device components. The storage medium 307 may be a temporary storage medium such as a volatile random access memory. The storage medium 307 may also be a permanent storage medium such as a hard disk drive, a flash memory, a remote server (such as cloud storage) or a non-volatile random access memory. The storage medium 307 could be composed of different combinations of the same or different memory types.

Devices having sensors and/or sensor arrays are becoming ubiquitous. The `internet of things' drives connected sensors into new applications that require always on, or periodic data sending via wired or wireless communication and/or via the internet. Sensing devices can be used to track goods in the transit chain, or medicines to check that the temperature remains below a critical point. It is common that the sensors are based upon thin film transistors (TFTs) or diodes which can be used as transducers to make sensitive measurements of ambient physical parameters such as optical illumination, or the level of a specific gas or volatile compound. In these devices, the ambient parameters being sensed influence the conductivity of charge carriers from a source electrode to a drain electrode through the transistor channel, and the level of current flow then gives an indication of the parameter. The sensor elements may be made sensitive to a specific sensing parameter by functionalisation of the TFT channel material, for instance by using an optically sensitive material which responds to a particular wavelength of light, or a biological molecule that binds a particular analyte. By measuring the change in current flow between the source and drain electrodes, the level of the ambient parameter can be determined. Several TFTs can be combined into a sensor array to create a large area device with spatial sensitivity, to allow data averaging or for imaging applications. Several TFTs may be arranged in a circuit each circuit forming a sensor element of the sensor array.

The provision of a plurality of sensors in an array may require the calibration of each sensor in the array to obtain a reliable and robust sensor array. The calibration of sensors, which may comprise transducers, field effect transistors (FET), such as graphene FETs, or TFTs, may comprise the application of a bias voltage or gate voltage to a gate electrode during use. The sensor elements may use how a stimuli affects the flow of current through a conductive or semiconductive channel, such as a transistor channel, to make measurements. The use of a bias or gate voltage may alter the conductivity of the channel and therefore calibrate the sensor element. This bias/gate voltage serves to expand or contract the depletion region, which effectively changes the channel resistance or, in the case of graphene FETs, the gate voltage can be used to control the carrier density and position of the Fermi level in the graphene channel, which translates to a change in the channel resistance. Depending upon the physical dimensions of the TFT current flow can be very small - on the order of nano- or pico-amperes, and so requires very sensitive electronics to measure accurately.

Manufacturing tolerances typically result in a sensor array in which each sensor element may require a different bias/gate voltage. This results in a complicated calibration procedure when commissioning the sensor array.

It may be desirable to provide a sensor or sensor array that can accurately measure ambient parameters, such as by using a TFT or an array of TFTs, by detecting very small changes in the current flow through the channel of the TFT, and to reduce the burden of individually tuning and calibrating the TFTs by changing all the individual gate voltages independently. It may also be beneficial to tune the resistance of a sensor so that it falls within a specific tolerance for the associated readout electronics or application specific integrated circuit (ASIC), or to aid with calibration of a sensor.

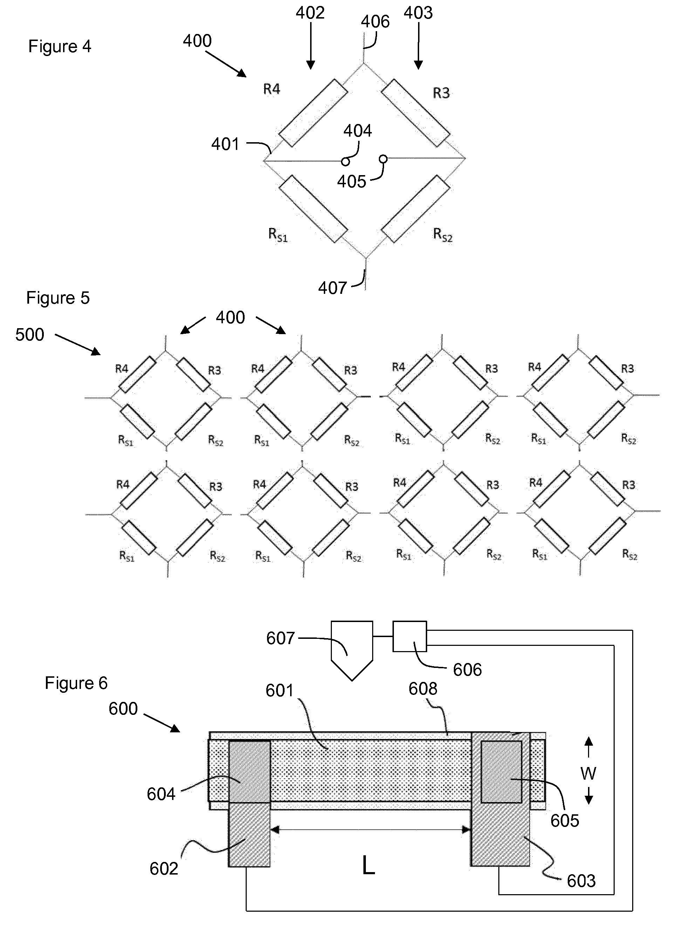

Figures 4 to 13 show a sensor array comprising a plurality of sensor elements and apparatus and methods for fabricating sensors of the array. The methods may obviate the need to electrically calibrate the sensor elements and/or sensor array by determination of individual gate/bias voltages.

Figure 4 shows a sensor element 400 and Figure 5 shows a plurality of sensor elements 400 arranged in a sensor array 500. Each sensor element 400 comprises a bridge circuit 401 having a first branch 402 and a second branch 403. The bridge circuit in this example comprises a Wheatstone bridge configuration. This configuration allows very accurate measurement of resistance and so small changes in current flow through the device can be detected. The bridge circuit may require calibration such that the ratio of resistance or impedance of resistive element R4 in relation to the resistance or impedance of resistive element RS1 and the ratio of resistance or impedance of resistive element R3 is relation to the resistance or impedance of resistive element RS2, are substantially the same. At least one of the resistive elements may be provided by a transducer, such as a TFT, so that the bridge circuit 401 can be used as a sensor. Thus, the resistance of the transistor channel provides the resistance of the resistive element. In some embodiments, RS1 and RS2 are provided by TFTs and R3 and R4 comprise TFTs or other type of resistive element, such as a discrete resistor. RS2 may comprise the sensing component of the sensor element 400. Accordingly RS2 may be configured to be exposed to stimuli when in use. When the ratio of resistances R4/Rs1 is not equal to the ratio R3/Rs2, due to a stimuli for example, the bridge will become unbalanced and there will be a finite voltage difference between the bridge electrodes 404 and 405. The current flow or voltage between the branches 402, 403 of the bridge circuit 401 may be determined by measurement from bridge electrodes 404 and 405. Sensor read-out circuitry (not shown) may be provided to perform this function that connects to the bridge electrodes 404, 405. The bridge may be energised by application of a voltage between the electrodes 406,407.

The bridge circuit 400 may be calibrated to balance the bridge circuit for a particular stimulus set point. For example, the calibration may be performed in zero incident light if the sensing component is configured to detect light or an average ambient temperature if the sensing component is configured to detect temperature. The resistance of one or more of the other resistive elements of the bridge circuit may be adjusted to achieve a zero output voltage condition which balances the bridge (zero voltage difference between electrodes 404 and 405). It will be appreciated that in other examples, the resistance of one or more resistive elements of the bridge circuit may be tuned to a predetermined value, which may or may not balance the bridge.

In an ideal sensor or sensor array, after fabrication the resistance of the sensors RS1 and RS2 is well matched to the other resistance elements in the array R3 and R4, to ensure accurate measurement of the sensing component's resistance changes and therefore current flow in the channel. However, in practice the resistance of the resistive elements, such as TFT channels, can vary as a function of the manufacturing process. The compensation of manufacturing inconsistencies by application of different gate/bias voltages may lead to complicated read-out circuitry.

It will be appreciated that the while the sensor elements and sensor array of the above examples comprise bridge circuits and arrays of bridge circuits, the techniques described below can be applied to other electrical components, such as TFTs, in other devices whether sensor elements or not.

Figures 6 to 13 illustrate methods for tuning the resistance of resistive elements, such as TFTs, by physical modification of the resistive element, which may be applied during or after fabrication of the sensor element or sensor array of which they form part. Adjusting the resistivity, resistance or impedance of an electronic component that includes a resistive element by physically modifying its structure provides an advantageous means for tuning electronic components that may be applied during fabrication.

Figure 6 shows a schematic diagram of a resistive element comprising TFT 600 having a transistor channel 601 of a semiconductor and/or two-dimensional material, such as graphene. The transistor channel provides an electrically conductive or semiconductive path between a source electrode 602 and a drain electrode 603. The TFT 600 typically includes a gate electrode for modifying the conductivity of the channel 601, which is not shown for clarity. The channel 601 has a channel width, W, and a channel length L. The electrodes 602 and 603 includes a respective contact region 604, 605 comprising a region in which the electrodes overlie the channel and can make electrical contact therewith.

The TFT 600 is shown during fabrication. The channel 601 may have been formed by appropriately doping a semiconductor substrate (not shown) and/or a two-dimensional material or film such as graphene may have been applied to the substrate to form the channel. A metallisation step may have been performed to apply the source 602 and drain 603 electrodes to the substrate. It will be appreciated that other steps such as etching, photolithography or application of photoresist may have also been performed as required. These steps may form part of the claimed method.

In this example, prior to encapsulation of the TFT or whole sensor element or array, a measurement of the resistance of the TFT is taken using the source electrode 602 and the drain electrode 603. The measurement of the resistance may be used to determine how to physically modify the TFT such that its resistance is altered to a predetermined value. The predetermined value may be a fixed value or dependent on another measurement, such as of the resistance of a further resistive element or TFT in the bridge circuit 400 or sensor array 500.

Thus, based on the measurement taken from the source electrode 602 and the drain electrode 603 that is indicative of an electrical resistance of the resistive element 600 that includes the channel 601, signalling from a controller 606 may provide for the physical modification of the TFT 600.

The physical modification may be performed by a fabrication device 607 under the control or instruction of the controller 606. The control may be interactive in that modifications made by the fabrication device 607 are monitored by measuring the changes in resistance from the source and drain electrode, which may provide closed loop feedback to the fabrication device 607 or controller thereof. The fabrication device 607 may be configured to make physical changes to one or more of the channel 601, the contact region 604 of the source electrode 602 and the contact region 605 of the drain electrode 603. The physical modification may be used to balance the resistance of the resistive element 600 with a second resistive element of the bridge circuit 401. The resistive element 600 may comprise RS1 and the second resistive element may comprise R3 or R4, for example.

The fabrication device may comprise a laser for the removal of material from the resistive element or disruption to the material of the resistive element to alter its resistance. The fabrication device may comprise a printer, such as an inkjet printer, to deposit conductive or semiconductive material to change the geometry of the electrodes and/or channel. The fabrication device may comprise a doping device, such as a chemical vapour deposition (CVD) device, for doping a substrate to increase or decrease the conductivity of the channel or adjacent parts of the substrate. The fabrication device may comprise a photolithography device for modifying the geometry of electrodes and/or channel.

The physical modification performed by the fabrication device 607 to adjust the resistance of the resistive element may comprises one or more of;
laser ablation of part of the source and/or drain electrodes or channel;
etching of part of the source and/or drain electrodes or channel;
printing of conductive or semiconductive material to add to the source and/or drain electrodes and/or channel;
doping of a semiconductor material that forms said channel.

Thus, turning to Figure 6, the controller 606 may determine a degree of physical modification from the measurement of resistance. In this instance, the controller 606 is configured to determine the width of a strip of material to be removed from the channel 601 to achieve the desired change in resistance. Thus, the difference between the measurement of resistance and a predetermined value is used to determine a width. This may be achieved using a predetermined function or look-up table. On determination of the width of the strip, the controller 606 may instruct the fabrication device, which in this example comprises a laser, to ablate the determined strip of material 608 from the channel. A further measurement of the resistance of the resistive element 600 may or may not be performed by the controller 606 to check that the removal of the strip 608 has had the desired effect on the resistance.

Alternatively, the removal of the strip may be performed interactively such that the measurement of resistance is performed during the laser ablation and the laser 607 is controlled based on the feedback of how the resistance is changing due to the laser removal of material. Resistance measurements may be taken substantially continuously to provide feedback to the fabrication device 607 or periodically after each operation of the fabrication device such that the physical modification is made iteratively.

The laser ablation has been described in relation to removing a strip along the width of the channel. However, the geometry of the channel could be modified in other ways, such as patterning of the channel by laser ablation, printing or etching or doping.

Further, in another example, the fabrication device 607 comprises a printer and the controller is configured to print electrode material or other conductive material around the edges of the contact region to reduce the contact resistance between the electrode 602, 603 and the channel 601. It will be appreciated that conductive material on edges of the electrodes that face the other of the electrodes may be considered to be reducing the width of the channel 601 as well as reducing the contact resistance. The fabrication device 607 may be configured to print an etching solution to reduce the area of contact in the contact region 604, 605 between the electrode(s) 602, 603 and thereby increase the resistance of the TFT 600. In a further example, the fabrication device 607 is configured to print a doping solution to increase the conductivity of the channel. In a still further example the fabrication device 607 may comprise a doping device such as a plasma deposition or CVD device to increase the conductivity of the channel 601.

In a further embodiment, the fabrication device 607 may have multiple heads each head configured to perform one of at least two of removing material of the resistive element, adding material to the resistive element or doping the resistive element.

In a further example, laser ablation may be performed after encapsulation. Thus, laser frequencies at which the encapsulation is substantially transparent can be used to ablate parts of the TFTs/resistive elements through the encapsulation material.

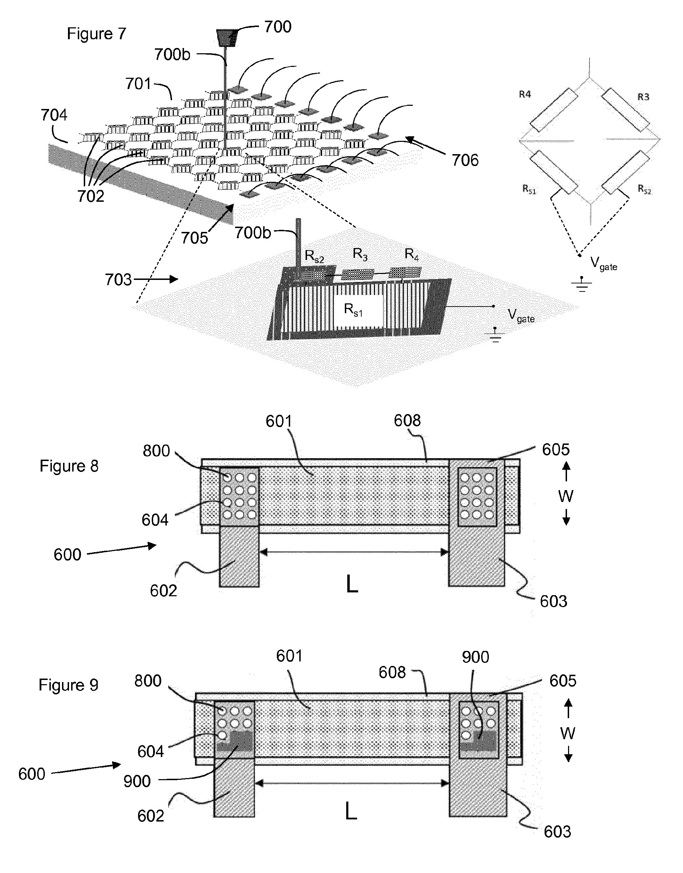

Figure 7 shows a head 700 of the fabrication device 607 operating over an array 701 of sensor elements 702. A laser beam 700b is shown ablating one of the sensor elements 702. The sensor elements 702 comprise the bridge circuit arrangement shown in Figure 4. Figure 7 also includes a more detailed section 703 showing an example layout of the bridge circuit 400. The section 703 shows two TFTs providing the resistive elements RS1, RS2, and two non-gated resistive elements R3 and R4 of the bridge circuit 400. The laser beam 700b is shown ablating part of the TFT resistive element RS2. In an alternative embodiment, the resistive elements R3 and R4 could be formed as part of the read-out circuit as CMOS components.

The array 701 is formed in a substrate 704. The substrate 704 includes a plurality of read-out pads 705, 706 along two of the edges of the substrate for each of the rows and columns of sensor elements 702 in the array. Thus, selection of the appropriate row pad 705 and column pad 706 provides a connection to one of the sensor elements 702. The read-out pads 705, 706 thus provide a connection to the bridge electrodes 404, 405 of each bridge circuit 401. In this example, the measurement of the bridge output voltage (between the branches between terminals 404, 405) is used to control the physical modification of one or more of the resistive elements of each sensor element 702. Thus, the controller may be configured to address each sensor element 702 in turn (or measure them all simultaneously) to obtain the measurement of the electrical output in the bridge circuit 401. The controller may then instruct or interactively control the fabrication device head 700 to ablate (or physically modify by other means as explained above) one of the resistive elements (RS2 in this example) to balance the resistive element with a second resistive element in the bridge circuit (or specifically the ratios mentioned above) which, in turn, may bring about balance in the bridge circuit.

This physical modification process is ideally carried out under controlled environmental conditions corresponding to a "reference operating state" at which each bridge circuit will be tuned to have a zero output voltage. In this example, backplane switching transistors are incorporated in the substrate 704 which provide connections to the pads 705, 706, as will be familiar to those skilled in the art of sensor arrays. Further, the sensing TFT, Rs1, and a balancing TFT, RS2, share a common gate electrode. In this schematic, laser ablation is being used to tune the dimensions of the balancing TFT so that the output voltage (between pads 404 and 405 of each bridge) is zero under the gate biasing condition (Vgate) where the transconductance of the sensor TFT (Rs1) may be maximized.

Thus, in Figure 7 the fabrication device is configured to address each sensor element of the array in turn and based on the measurement taken of each sensor element, perform physical modification of the resistive elements that form the sensing element.

Figures 8 and 9 illustrate a convenient way of physically modifying the structure of the TFT to alter its resistance. This technique may be applied to other resistive elements, such as transducers in general.

Figure 8 shows a TFT arrangement similar to that shown in the Figure 6 and the same reference numerals have been applied. However, in this example, the contact region 604 of the source electrode 604 and the contact region 605 of the drain electrode 603 has been patterned to include a plurality of apertures 800. The apertures define a plurality of discrete areas in the contact region where the electrode 602, 603 is not in electrical contact with the channel 601. The electrodes 602, 603 may be applied to the channel having the pattern. Alternatively, the electrodes may be patterned after they have been applied by photolithography, etching or laser ablation.

A controller (not shown in this example) may be configured to determine a number of the apertures to fill with conductive or semiconductive material to achieve a desired change in the resistance of the TFT 600. Thus, the physical modification affects the contact resistance between the electrode and the channel.

Thus, the controller may determine a degree of the physical modification, i.e. the number of apertures to fill, based on said measurement (as explained in relation to figure 6 or 7) and subsequently provide instructions or control to a printing device for filling the determined number of apertures. It will be appreciated that the controller may be have predetermined information, such as a look-up table, related to the expected change in resistance versus the number of apertures filled. Accordingly, the step of determining the degree of physical modification comprises selecting a number of apertures from the total number of apertures present in the electrodes to effect the physical modification.

The process of filling the apertures may be performed based only on an initial determination by the controller using an initial measurement of the resistance/balance of the bridge circuit. The process may be performed iteratively such that the controller may provide for the filing of one or more apertures followed by a further measurement until the desired resistance/balance is reached. The process may be performed interactively with substantially continuous feedback being provided to the printing device by the controller.

Figure 9 shows five apertures 800 of each of the source electrode 602 and the drain electrode 603 having been filled 900 with conductive material by the fabrication device (not shown) under instruction of the controller (also not shown).

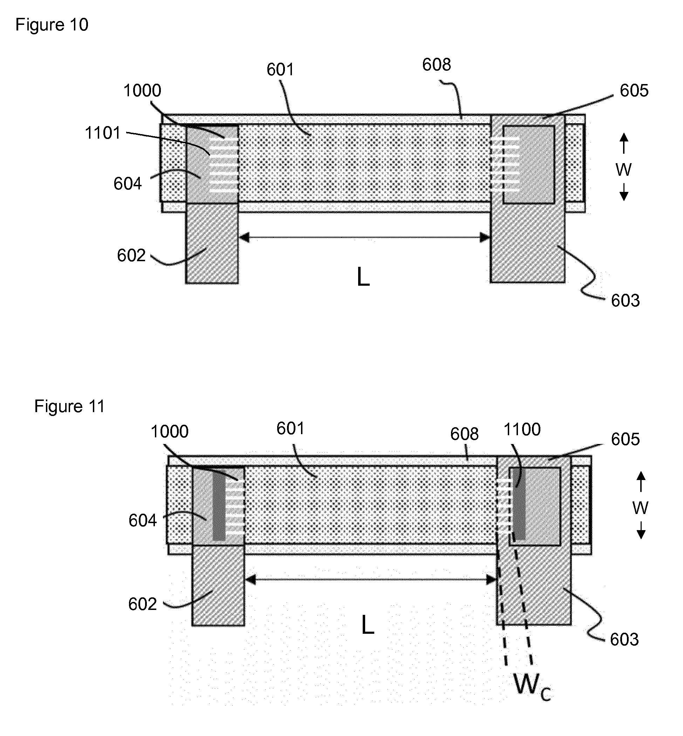

Figures 10 and 11 shows a similar example to figures 8 and 9. In this example, the apertures comprise lines 1000. Accordingly the controller may select a number of lines to fill. Alternatively, the controller may select the amount to fill a plurality or all of the lines i.e. the width of the conductive material applied to shorten the length of the lines. Thus, the selection of a number of lines to fill from the number of lines present in the electrodes may be performed by the controller. Alternatively, the controller may be configured to control the length of each line by filling it with conductive material to shorten its length.

The use of lines 1000 that extend from a side of the electrode 602, 603 that faces the other of the electrodes 602, 603 may be advantageous as the filling of the lines 1000 can additionally modify the effective length (L) of the channel. The electrodes may thus have a comb-like structure. Thus, the length of the channel can be considered to be length L measured between the contact regions 604, 605 plus a function of the length of the lines Wc that extend into the electrodes. The deposition or printing of conductive material 1100 may be controlled to fill one or more of the lines, or partially fill a plurality of or all of the lines. Thus, the physical modification affects the contact resistance between the electrode and the channel as well as the effective length of the channel L+f(Lc₁)+ f(Lc₂) where L_{c1} and L_{c2} represent the length of the lines of the source and drain electrodes respectively measured from an edge of the electrode facing the other electrode to the electrode's conductive material 1100.

Figure 11 shows all of lines 1000 partially filled with a conductive material 1100 from a closed end 1101 of each of the lines. Filling the lines from their closed end 1101 provides for modification of the effective channel length.

It will be appreciated that the lines 1000 may be arranged central in the contact region or extend from a different edge. Thus, the filling of the lines may affect the contact resistance between the channel 601 and the electrode 603, 604 but not the channel length.

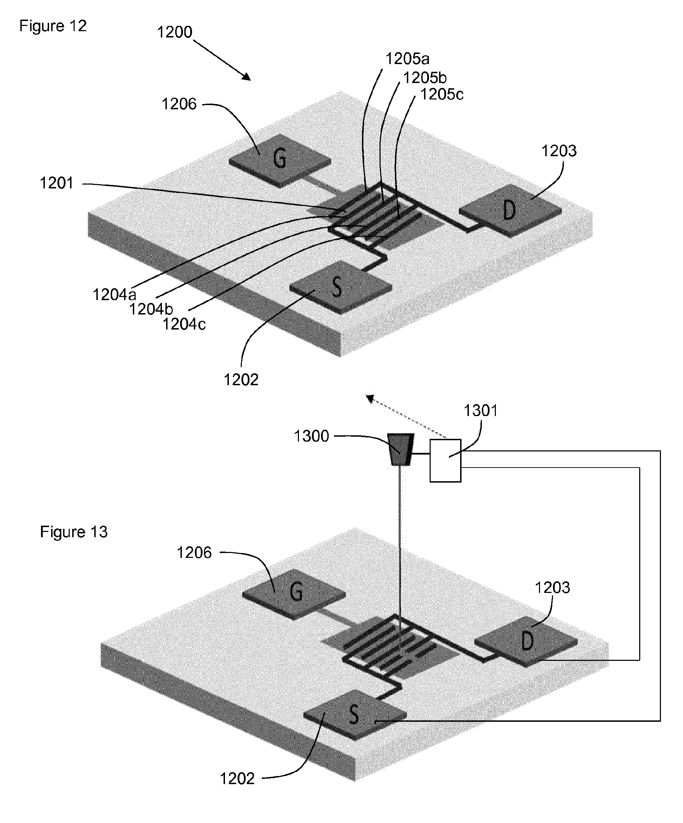

Figures 12 and 13 show a further example comprising a thin film transistor 1200 having a source electrode 1202 and a drain electrode 1203 and a channel 1201. A gate electrode 1206 provides for modification of the conductivity of the channel 1201. The source electrode comprises a comb structure having a plurality of fingers 1204a, 1204b, 1204c. The drain electrode also comprises a comb structure having a plurality of fingers 1205a, 1205b, 1205c that are interdigitated with the fingers 1204a, 1204b, 1204c. The interdigitated fingers effectively provide a meandering channel therebetween.

Figure 13 shows a laser 1300 controlled by a controller 1301. The controller 1301 is configured to take one (or more) measurements of the resistance of the transistor 1200 for the purpose of controlling the laser 1300. Alternatively, the controller 1301 may continually monitor the resistance while the laser 1300 is controlled to monitor its effect on the resistance of the transistor 1300.

The controller 1300 is thus configured to provide for the slicing, such as by way of laser ablation or other means such as etching, of a number of interdigitated fingers 1204a, b, c and 1205a, b, c that form part of the source and or drain electrodes to provide the physical modification to the resistive element 1200 (TFT) to control its resistance. Thus, the controller may be configured to, based on the measurement of the resistance of the resistive element determine a number of the interdigitated fingers to slice (i.e. provide a break in the conductivity of the finger) and provide signalling to the laser to ablate the finger material. Thus, predetermined information relating to the change in resistance caused by slicing each finger or a particular length of each finger may be available to the controller such that it may determine the physical modification based on an initial measurement of the resistance. Accordingly the controller may select a modification from a predetermined list of modifications comprising a number of fingers to slice or a number of fingers in combination with the length of fingers at which to make the slice. Alternatively, the controller 1301 may be provided with feedback of the changing resistance as the laser 1300 is instructed to slice the fingers. Accordingly, the controller 1300 may provide for slicing until the measured resistance reaches a desired value.

It will be appreciated that the resistive elements are described, in the most part, as comprising TFTs. However, the teachings herein can be applied to field effect transistors, transducers, or a graphene based field effect transistor (or any other field effect transistor having a two-dimensional material forming at least part of the channel).

The techniques discussed above in relation to the making of a physical modification may be made before or after wafer dicing. Thus, each sensor or sensor array on a wafer may be probed to take the measurement and then physically modified as described above prior to dicing. Alternatively, the wafer may be diced and each chip may then be measured and physically modified as described above. Alternatively, the measurements may be made while the sensors are part of the wafer and the modification may be made after dicing.

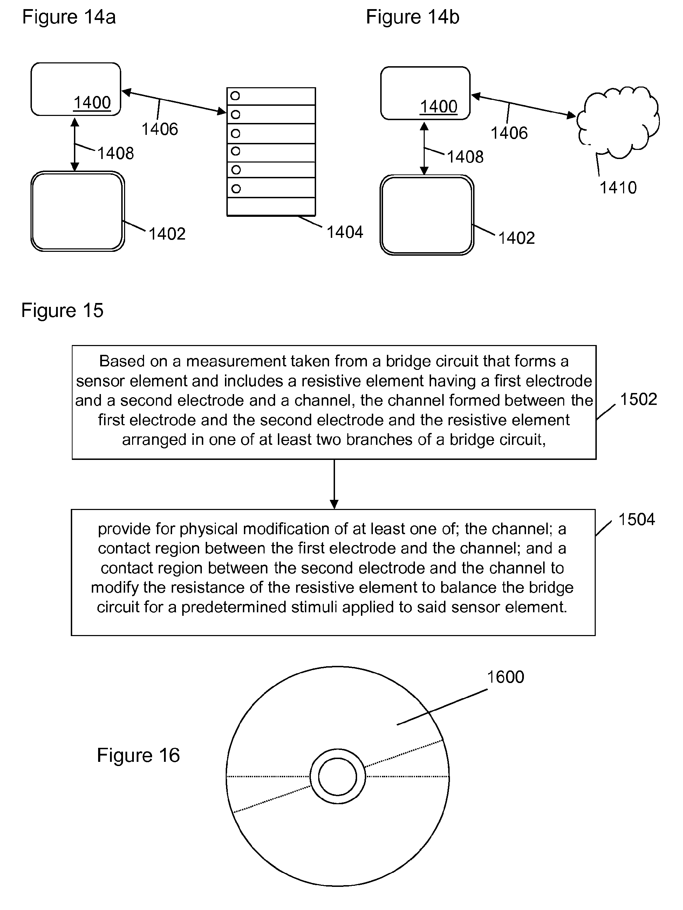

Figure 14a shows an example of an apparatus 1400 in communication with a remote server. Figure 14b shows an example of an apparatus 1400 in communication with a "cloud" for cloud computing. In figures 14a and 14b, apparatus 1400 (which may be apparatus 100, 200 or 300) is also in communication with a further apparatus 1402. The apparatus 1402 may be a controller for a fabrication device or a fabrication device, for example. Communication may be via a communications unit, for example.

Figure 14a shows the remote computing element to be a remote server 1404, with which the apparatus 1400 may be in wired or wireless communication (e.g. via the internet, Bluetooth, NFC, a USB connection, or any other suitable connection as known to one skilled in the art). In figure 14b, the apparatus 1400 is in communication with a remote cloud 1410 (which may, for example, be the Internet, or a system of remote computers configured for cloud computing). For example, the apparatus providing determination of the physical modification may be located at a remote server 1404 or cloud 1410 and accessible by the first apparatus 1400. Thus, the measurement may be performed locally but the determination of the physical modification may be performed remotely. In other examples the second apparatus may also be in direct communication with the remote server 1404 or cloud 1410.

Figure 15 shows a flow diagram illustrating the steps of taking a measurement from a sensor element that includes a resistive element having a first electrode and a second electrode and a channel, the channel formed between the first electrode and the second electrode and the resistive element arranged in one of at least two branches of a bridge circuit (step 1502). Providing for physical modification of at least one of;
the channel;
a contact region between the first electrode and the channel; and
a contact region between the second electrode and the channel;
to balance the resistance of the resistive element with a second resistive element of the bridge circuit is shown as step 1504.

Figure 16 illustrates schematically a computer/processor readable medium 1600 providing a program according to an example. In this example, the computer/processor readable medium is a disc such as a digital versatile disc (DVD) or a compact disc (CD). In other examples, the computer readable medium may be any medium that has been programmed in such a way as to carry out an inventive function. The computer/processor readable medium may be a removable memory device such as a memory stick or memory card (SD, mini SD, micro SD or nano SD). Furthermore, the computer program code may be distributed between the multiple memories of the same type, or multiple memories of a different type, such as ROM, RAM, flash, hard disk, solid state, etc.

The apparatus shown in the above examples may be a controller or a fabrication device or a module/circuitry for one or more of the same.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus configured to:
based on a measurement taken from a bridge circuit that forms a sensor element and that includes a resistive element having a first electrode and a second electrode and a channel, the channel formed between the first electrode and the second electrode and the resistive element arranged in one of at least two branches of a bridge circuit, provide for the physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.

2. The apparatus of claim 1, wherein the apparatus is a semiconductor device fabrication apparatus or a module/circuitry for the same.

3. A method, the method comprising
based on a measurement taken from a bridge circuit that forms a sensor element and that includes a resistive element having a first electrode and a second electrode and a channel, the channel formed between the first electrode and the second electrode and the resistive element arranged in one of at least two branches of a bridge circuit, providing for the physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.

4. The method of claim 3, wherein the method comprises determining a degree of the physical modification required based on said measurement and subsequently providing for said determined degree of physical modification;
wherein the step of determining the degree of physical modification comprises selecting a degree of physical modification from a set of predetermined physical modifications, the set of predetermined physical modifications based on the form of the first and/or second electrodes.

5. The method of claim 3 or claim 4, wherein the method comprises iteratively providing for the physical modification based on measurements taken from a first electrode and a second electrode that is indicative of an electrical resistance of the resistive element.

6. The method of any one of claims 3 to 5, wherein the step of providing for physical modification comprises providing for the physical modification of a length or width of the channel to adjust the resistance of the resistive element.

7. The method of any one of claims 3 to 6, wherein the step of providing for physical modification comprises providing for the physical modification an area of contact between the first or second electrode and the channel to adjust the resistance of the resistive element.

8. The method of claim 7, wherein the method includes;
providing for the addition of conductive material to increase a contact area between the first and/or second electrode and the channel; or
providing for the removal of conductive material to increase a contact area between the first and/or second electrode and the channel.

9. The method of any one of claims 6 to 8 wherein the physical modification to adjust the resistance of the resistive element comprises one or more of;
laser ablation of part of the first and/or second electrodes or channel;
localised annealing of the first and/or second electrodes or channel;
etching of part of the first and/or second electrodes or channel;
printing of conductive or semiconductive material to add to the first and/or second electrodes and/or channel;
doping of a semiconductor material that forms said channel.

10. The method of claim 7, wherein the first and/or second electrode, at their respective contact region, are patterned to includes a plurality of apertures, such that electrical contact between the electrode and the channel is absent at the apertures, the method including the steps of;
determining, based on the measurement taken from the first electrode and the second electrode, a number of the plurality of apertures to be filled, in full or in part, with conductive material to adjust the resistance of the resistive element; and
providing for the filling of the determined number of apertures.

11. The method of claim 9, wherein the plurality of apertures comprise one or more of; holes or lines.

12. The method of any one of claims 3 to 7, wherein the step of providing for physical modification is performed after encapsulation of the resistive element.

13. The method of any one of claims 3 to 12, wherein the resistive element comprises one of;
a field effect transistor;
a transducer;
a graphene based field effect transistor;
a field effect transistor having a two-dimensional material forming at least part of the channel.

14. The method of any one of claims 3 to 13, wherein the measurement taken from the sensor element is taken from at least one of;
the first and second electrodes of resistive element, the measurement indicative of the resistance of the resistive element; and
the bridge circuit, the measurement indicative of the balance of the bridge circuit.

15. A computer readable medium comprising computer program code stored thereon, the computer readable medium and computer program code being configured to, when run on at least one processor, perform at least the following:
based on a measurement taken from a bridge circuit that forms a sensor element and includes a resistive element having a first electrode and a second electrode and a channel, the channel formed between the first electrode and the second electrode and the resistive element arranged in one of at least two branches of a bridge circuit, provide for physical modification of at least one of;
the channel;
a contact region between the first electrode and the channel; and
a contact region between the second electrode and the channel;
to modify the resistance of the resistive element to balance the bridge circuit for a predetermined stimuli applied to said sensor element.
